# EUROPEAN PATENT SPECIFICATION

(11) **EP 4 446 625 B1**
(45) Date of publication and mention of the grant of the patent: **22.07.2026**
(21) Application number: 23743244.8
(22) Date of filing: 17.01.2023
(51) Int. Cl.: F16J 15/08, F02F 1/16, F02F 11/00, F02F 1/00

(54) **GAS SEAL STRUCTURE OF INTERNAL COMBUSTION ENGINE**
GASDICHTUNGSSTRUKTUR FÜR EINEN VERBRENNUNGSMOTOR
STRUCTURE DE JOINT D'ÉTANCHÉITÉ AUX GAZ DE MOTEUR À COMBUSTION INTERNE

(30) Priority: 24.01.2022 JP 2022008821
(43) Date of publication of application: 16.10.2024
(73) Proprietor: MITSUBISHI HEAVY INDUSTRIES ENGINE & TURBOCHARGER, LTD., Sagamihara-shi, Kanagawa 252-5293 (JP)
(72) Inventor: SAKAMOTO, Kohei, Sagamihara-shi, Kanagawa 252-5293 (JP); WATANABE, Sota, Sagamihara-shi, Kanagawa 252-5293 (JP); IKUMA, Hiroyasu, Sagamihara-shi, Kanagawa 252-5293 (JP); TAKIMOTO, Yusuke, Sagamihara-shi, Kanagawa 252-5293 (JP)
(74) Representative: Studio Torta S.p.A.
(86) International application number: PCT/JP2023/001186
(87) International publication number: WO 2023/140250

(56) References cited:
- CN-A- 105 841 890
- GB-A- 2 364 548
- JP-A- 2001 521 601
- JP-A- 2001 521 601
- JP-B2- 4 382 936
- JP-U- S5 761 146
- US-A- 4 867 118
- US-A- 5 636 850

## Description

### Field

The present disclosure relates to a gas sealing structure for an internal combustion engine.

### Background

An internal combustion engine includes a cylinder block, a cylinder head, and a piston. In the cylinder block, a plurality of space parts formed in a columnar shape along the vertical direction are provided spaced apart in the horizontal direction. A cylinder liner formed in a cylindrical shape is fitted into each of the space parts. The piston is movably supported in the axial direction with respect to the cylinder liner. When the cylinder head is fastened to the top of the cylinder block via a gasket, a combustion chamber facing the piston is defined. In the combustion chamber, an intake port and an exhaust port communicate with each other, and the intake port can be opened and closed by an intake valve, and the exhaust port can be opened and closed by an exhaust valve. Also, the cylinder head is provided with a fuel injection valve that injects fuel to the combustion chamber.

The fuel gas in the combustion chamber is prevented from leaking to the outside, by the gasket disposed between the cylinder liner and the cylinder head. That is to say, while the gasket is disposed between the cylinder block and the cylinder head, the cylinder head is fastened to the cylinder block with a plurality of bolts. In this process, the upper surface of the gasket comes into close contact with the lower surface of the cylinder head, and the lower surface of the gasket comes into close contact with the upper surface of the cylinder liner. Consequently, by applying a certain load to the contact surface between the gasket and the cylinder head and the contact surface between the gasket and the cylinder liner, the contact surfaces come into close contact with each other and are sealed. For example, such a gas sealing structure for an internal combustion engine includes those disclosed in the following Patent Literatures.

### Citation List

### Patent Literature

Patent Literature 1: Japanese Examined Utility Model (Registration) Application Publication No. S63-020850
Patent Literature 2: Japanese Patent Application Laid-open No. 2014-126023
Patent Literature 3: JP4382936B2
Patent Literature 4: JP2001521601A
Patent Literature 5: US5636850A
Patent Literature 6: GB2364548A
Patent Literature 7: US4867118A discloses a gas sealing structure for an internal combustion engine according to the preamble of claim 1.

### Summary

### Technical Problem

By receiving a certain load between the cylinder head and the cylinder liner, the upper and lower surfaces of the gasket come into close contact with the cylinder head and the cylinder liner. In this process, the contact area between the gasket and the cylinder head differs from the contact area between the gasket and the cylinder liner. That is to say, the surface pressure between the gasket and the cylinder head with a large contact area, becomes lower than the surface pressure between the gasket and the cylinder liner with a small contact area. On the other hand, while the internal combustion engine is operated, the cylinder liner is deformed in accordance with the rigidity of the cylinder block that is deformed upon receiving an explosion load. However, the cylinder head is deformed in accordance with its own rigidity, which behaves differently from the cylinder liner. Consequently, a relative slip occurs on the contact surface between the gasket and the cylinder head on the side where the surface pressure is low. Thus, there is a problem in that the surfaces where the relative slip occurs, that are, the upper surface of the gasket and the lower surface of the cylinder head will be roughened, reducing the gas sealing performance of the gasket.

The present disclosure has been made to solve the problem described above, and an object of the present disclosure is to provide a gas sealing structure for an internal combustion engine designed to improve the gas sealing performance.

### Solution to Problem

To achieve the above-described object, there is provided a gas sealing structure for an internal combustion engine, comprising: a cylinder block that includes a space part formed in a columnar shape; a cylinder liner that is formed in a cylindrical shape and that is disposed in the space part; a piston that is movably supported in an axial direction by the cylinder liner; a cylinder head that is fastened to top of the cylinder block; and a gasket that is disposed between the cylinder block and the cylinder head and between the cylinder liner and the cylinder head, and that includes a fire ring, wherein a contact area between the cylinder liner and the fire ring and a contact area between the cylinder head and the fire ring are same, wherein a first groove along a peripheral direction of the fire ring is provided on a contact surface of the cylinder liner with which the fire ring comes into contact, a second groove along the peripheral direction of the fire ring is provided on a contact surface of the cylinder head with which the fire ring comes into contact,
characterized in that the first groove and the second groove are disposed shifted in a radial direction of the cylinder liner.

### Advantageous Effects of Invention

With the gas sealing structure for the internal combustion engine of the present disclosure, it is possible to improve the gas sealing performance.

### Brief Description of Drawings

FIG. 1 is a sectional view of a main part illustrating a diesel engine of the present embodiment.
FIG. 2 is a sectional view of a main part illustrating a gas sealing structure for an internal combustion engine before being fastened.
FIG. 3 is a sectional view of a main part illustrating the gas sealing structure for the internal combustion engine after being fastened.
FIG. 4 is a graph illustrating surface pressure distribution in a radial direction on a contact surface between a gasket and a cylinder.

### Description of Embodiments

Hereinafter, with reference to the accompanying drawings, a preferred embodiment of the present disclosure will be described in detail. However, the present disclosure is not limited to the embodiment, and when there are a plurality of embodiments, the present disclosure also includes those configured by combining the embodiments. Moreover, components of the embodiment include components that can be easily assumed by those skilled in the art, and components substantially the same, and components that fall within a so-called range of equivalents.

### <Engine>

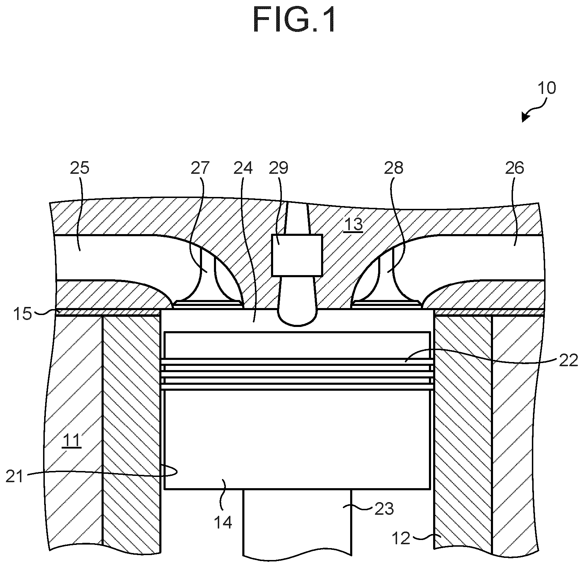

FIG. 1 is a sectional view of a main part illustrating a diesel engine of the present embodiment.

As illustrated in FIG. 1, a diesel engine (internal combustion engine) 10 includes a cylinder block 11, a cylinder liner 12, a cylinder head 13, a piston 14, and a gasket 15. In the present embodiment, the internal combustion engine is the diesel engine 10. However, the internal combustion engine may also be another type of engine such as a gasoline engine.

The cylinder block 11 is formed in a block shape, and is provided with a space part 21 formed in a columnar shape along the vertical direction. Although not illustrated, a plurality of the space parts 21 are provided spaced apart in the horizontal direction of the cylinder block 11. The cylinder liner 12 is formed in a cylindrical shape, and is fixed by being fitted into the space part 21. The cylinder head 13 is disposed on the top of the cylinder block 11 and the cylinder liner 12, and is fastened and fixed to the cylinder block 11 by a plurality of bolts (not illustrated).

The piston 14 is formed in a columnar shape, and a plurality (three in the present embodiment) of piston rings 22 that are spaced apart in the axial direction, are mounted on the outer peripheral surface. The piston 14 is disposed inside the cylinder liner 12, and is movably supported along the axial direction. In this process, the outer peripheral part of the piston ring 22 of the piston 14 slides on the inner peripheral surface of the cylinder liner 12. Although not illustrated, a crankshaft is rotatably supported on the lower part of the cylinder block 11, and the piston 14 and the crankshaft are connected via a connecting rod 23.

The gasket 15 is disposed between the cylinder block 11 and the cylinder head 13, and between the cylinder liner 12 and the cylinder head 13. While the gasket 15 is disposed between the cylinder head 13 and the cylinder block 11, the cylinder head 13 is fastened to the cylinder block 11. The upper surface of the gasket 15 comes into close contact with the lower surface of the cylinder head 13, and the lower surface of the gasket 15 comes into close contact with the upper surface of the cylinder liner 12. The gasket 15 has a gas sealing function.

A combustion chamber 24 is a space defined by the lower surface of the cylinder head 13, the inner peripheral surface of the cylinder liner 12, and the upper surface of the piston 14. Each end part of an intake port 25 and an exhaust port 26 provided in the cylinder head 13 communicate with the combustion chamber 24. A lower end part of an intake valve 27 is disposed in the intake port 25, and a lower end part of an exhaust valve 28 is disposed in the exhaust port 26. The intake valve 27 and the exhaust valve 28 are movably supported by the cylinder head 13 in the axial direction, and are energized in the direction (upward in FIG. 1) that closes the intake port 25 and the exhaust port 26 with an energizing member (not illustrated).

The intake valve 27 and the exhaust valve 28 open and close the intake port 25 and the exhaust port 26 when an intake cam and an exhaust cam, which are not illustrated, are operated. Moreover, a fuel injection valve 29 is disposed above the combustion chamber 24, that is, on the lower part of the cylinder head 13. The fuel injection valve 29 can inject high-pressure fuel into the combustion chamber 24 at a certain timing.

While the crankshaft is rotated twice, the diesel engine 10 performs four processes of an intake process, a compression process, an expansion process, and an exhaust process. In this process, an intake cam shaft and an exhaust cam shaft rotate once, and the intake valve 27 and the exhaust valve 28 open and close the intake port 25 and the exhaust port 26. When air is supplied to the combustion chamber 24 from the intake port 25, the intake air is compressed by the rise of the piston 14. Moreover, when high-pressure fuel is injected into the combustion chamber 24 from the fuel injection valve 29, the high-pressure fuel is spontaneously ignited and combusted. In this process, the piston 14 is pressed down due to the explosion load and rotates the crankshaft. The combustion gas generated in the combustion chamber 24 is discharged from the exhaust port 26 as flue gas.

### <Gas Sealing Structure>

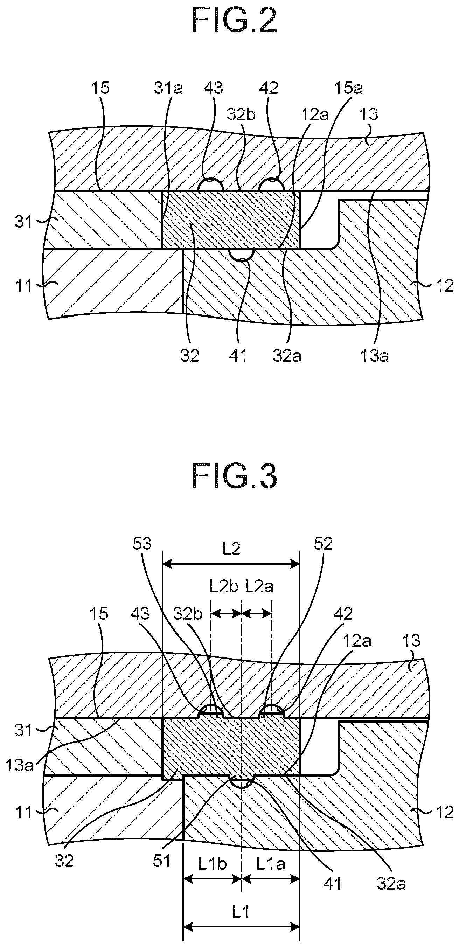

FIG. 2 is a sectional view of a main part illustrating a gas sealing structure for an internal combustion engine before being fastened. FIG. 3 is a sectional view of a main part illustrating the gas sealing structure for the internal combustion engine after being fastened.

The gasket 15 comes into close contact with the upper surface of the cylinder liner 12 and the lower surface of the cylinder head 13, by the fastening force of the cylinder head 13 with respect to the cylinder block 11. The gas (combustion gas or flue gas) generated in the combustion chamber 24 is prevented from leaking to the outside, by the gasket 15 disposed between the cylinder liner 12 and the cylinder head 13.

As illustrated in FIG. 2, the gasket 15 is formed in a flat plate shape having a certain thickness and a rectangular cross-section. A circular hole 15a as much as the number of cylinders corresponding to the combustion chamber 24 is formed on the gasket 15. The gasket 15 includes a gasket main body 31 and a fire ring 32. The gasket main body 31 is provided with a circular hole 31a. The fire ring 32 is formed in a ring shape, and is disposed on the inner peripheral part of the circular hole 31a of the gasket main body 31.

In the gasket 15, the gasket main body 31 is disposed between the cylinder block 11 and the cylinder head 13, and the fire ring 32 is disposed between the cylinder liner 12 and the cylinder head 13. In the gasket 15, when the fire ring 32 receive a fastening load from the cylinder liner 12 and the cylinder head 13, a lower surface 32a comes into close contact with an upper surface 12a of the cylinder liner 12, and an upper surface 32b comes into close contact with a lower surface 13a of the cylinder head 13.

In this process, in the fire ring 32, a radial length L1 of the cylinder liner 12 on the contact surface between the lower surface 32a and the upper surface 12a of the cylinder liner 12 differs from a radial length L2 of the cylinder liner 12 on the contact surface between the upper surface 32b and the lower surface 13a of the cylinder head 13. That is to say, the radial length L2 is longer than the radial length L1. Consequently, when the contact area between the fire ring 32 and the cylinder liner 12 differs from the contact area between the fire ring 32 and the cylinder head 13, and when the same load is received from above and below, the surface pressures on both contact areas also differ from each other. Hence, the relative slip due to the behavior different from those of the cylinder head 13 and the cylinder liner 12 is received by the lower surface 32a the surface pressure of which is low.

Therefore, in the gas sealing structure of the present embodiment, the contact area between the gasket 15 (fire ring 32) and the cylinder liner 12, and the contact area between the gasket 15 (fire ring 32) and the cylinder head 13 are made the same. Consequently, the upper surface 12a of the cylinder liner 12 that is the contact surface (the region of the radial length L1) with which the lower surface 32a of the fire ring 32 in the gasket 15 comes into contact, is provided with a first groove 41 along the peripheral direction. Moreover, the lower surface 13a of the cylinder head 13 that is the contact surface (the region of the radial length L2) with which the upper surface 32b of the fire ring 32 in the gasket 15 comes into contact, is provided with second grooves 42 and 43 along the peripheral direction. In this case, the number of the second grooves 42 and 43 is greater than the number of the first groove 41. That is, two second grooves 42 and 43 are provided on the cylinder head 13, and one first groove 41 is provided on the upper surface 12a of the cylinder liner 12. Also, the cross-sectional shapes and the cross-sectional dimensions of the first groove 41 and the second grooves 42 and 43 are the same.

That is to say, the cylinder liner 12 is provided with one first groove 41 along the peripheral direction on the upper surface 12a. The first groove 41 is provided on the contact region (the region of the radial length L1) of the cylinder liner 12 with which the lower surface 32a of the fire ring 32 comes into contact. On the other hand, the cylinder head 13 is provided with two second grooves 42 and 43 along the peripheral direction on the lower surface 13a. The second grooves 42 and 43 are provided on the contact region (the region of the radial length L2) of the cylinder head 13 with which the upper surface 32b of the fire ring 32 comes into contact. Consequently, the contact area between the cylinder liner 12 and the fire ring 32 is reduced by the first groove 41, and the contact area between the cylinder head 13 and the fire ring 32 is reduced by the second grooves 42 and 43. As a result, the contact area between the fire ring 32 of the gasket 15 and the cylinder liner 12, and the contact area between the fire ring 32 of the gasket 15 and the cylinder head 13 become the same. Here, the contact areas being the same means that the area ratio is within the range of 0% to 5%, for example.

The first groove 41 and the second grooves 42 and 43 are disposed shifted in the radial direction of the cylinder liner 12. The first groove 41 is provided at the middle position of the radial length L1. That is, a radial length L1a between the first groove 41 and one end of the radial length L1 and a radial length L1b between the first groove 41 and the other end of the radial length L1 are the same length. The second groove 42 functions as an inner second groove provided radially inside the first groove 41, and the second groove 43 functions as an outer second groove provided radially outside the first groove 41. Also, a radial length L2a between the first groove 41 and the second groove (inner second groove) 42 and a radial length L2b between the first groove 41 and the second groove (outer second groove) 43 are the same length.

As illustrated in FIG. 3, when the diesel engine 10 is to be assembled, the gasket 15 is disposed between the cylinder block 11 and the cylinder head 13. In this process, the fire ring 32 is disposed between the cylinder liner 12 and the cylinder head 13. In this state, as illustrated in FIG. 2, when the cylinder head 13 is fastened to the cylinder block 11 by a certain bolt fastening force, the fire ring 32 receives the compression load, and the lower surface 32a comes into close contact with the upper surface 12a of the cylinder liner 12, and the upper surface 32b comes into close contact with the lower surface 13a of the cylinder head 13.

The cylinder liner 12 and the cylinder head 13 are made of cast iron. On the other hand, the fire ring 32 of the gasket 15 is made of steel plate cold commercial (SPCC), which is a cold-rolled steel sheet. That is, the fire ring 32 is made of a material having hardness lower than those of the cylinder liner 12 and the cylinder head 13.

Consequently, when the cylinder head 13 is fastened to the cylinder block 11 and the fire ring 32 receives a compressive force in the sheet thickness direction, the fire ring 32 deforms plastically because surface pressure exceeding the yield point of the material is applied. As a result, a part of the lower surface 32a of the fire ring 32 that is not subject to the compressive force due to the first groove 41 protrudes downward to form a first convex part 51 that is inserted into the first groove 41. Moreover, parts of the upper surface 32b of the fire ring 32 that are not subject to the compressive force due to the second grooves 42 and 43 protrude upward to form second convex parts 52 and 53 that are inserted into the second grooves 42 and 43.

In the present embodiment, one first groove 41 is provided on the upper surface 12a of the cylinder liner 12, and two second grooves 42 and 43 are provided on the lower surface 13a of the cylinder head 13. However, the configuration is not limited thereto. The number of the first groove 41 and the second grooves 42 and 43 is not limited, as long as the contact area between the gasket 15 and the cylinder liner 12, and the contact area between the gasket 15 and the cylinder head 13 become the same. For example, the second groove may be provided on the lower surface 13a of the cylinder head 13, and the first groove 41 may not be provided on the upper surface 12a of the cylinder liner 12. Moreover, the forming positions and shapes of the first groove 41 and the second grooves 42 and 43 may also be set as appropriate.

### <Action of Gas Sealing Structure>

As illustrated in FIG. 2, the cylinder liner 12 is provided with the first groove 41 on the upper surface 12a facing the lower surface 32a of the fire ring 32, and the cylinder head 13 is provided with the second grooves 42 and 43 on the lower surface 13a facing the upper surface 32b of the fire ring 32. Consequently, the contact area between the fire ring 32 and the cylinder liner 12, and the contact area between the fire ring 32 and the cylinder head 13 become the same. Consequently, the surface pressure at the contact surface between the fire ring 32 and the cylinder liner 12, and the surface pressure at the contact surface between the fire ring 32 and the cylinder head 13 become the same.

While the diesel engine 10 is operated, the cylinder liner 12 is deformed in accordance with the rigidity of the cylinder block 11 that is deformed upon receiving an explosion load, and the cylinder head 13 is deformed in accordance with its own rigidity upon receiving an explosion load. In this example, because the contact surface pressure between the cylinder liner 12 and the fire ring 32, and the contact surface pressure between the cylinder head 13 and the fire ring 32 are the same, the relative slips on the contact surfaces of the cylinder liner 12, the fire ring 32, and the cylinder head 13 do not have to be received by one of the contact surfaces, and the slip amount is small. Consequently, surface roughness of the contact surface between the fire ring 32 and the cylinder liner 12, and the contact surface between the fire ring 32 and the cylinder head 13 is suppressed. Hence, a reduction in the gas sealing performance of the gasket 15 is suppressed.

Moreover, by receiving the compressive force from the cylinder liner 12 and the cylinder head 13, the lower surface 32a and the upper surface 32b of the fire ring 32 are deformed. Also, the first convex part 51 is inserted into the first groove 41 of the cylinder liner 12, and the second convex parts 52 and 53 are inserted into the second grooves 42 and 43 of the cylinder head 13. As a result, the first convex part 51 and the second convex parts 52 and 53 serve as anchors for the cylinder liner 12 and the cylinder head 13. Hence, it is possible to equalize the surface pressures on the upper and lower surfaces, and suppress the relative slip. In this case, by forming the fire ring 32 with a material having hardness lower than those of the cylinder liner 12 and the cylinder head 13, the slip is absorbed by the elastic deformation within the range of Young's modulus of the convex part of the anchor part. Hence, the groove will not be cracked due to the low hardness of the anchor part.

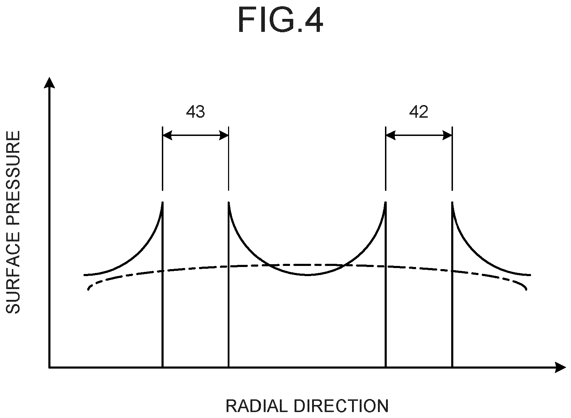

FIG. 4 is a graph illustrating the surface pressure distribution in the radial direction on the contact surface between the gasket and the cylinder.

FIG. 4 illustrates the surface pressure distribution in the radial direction of the fire ring 32, on the contact surface between the upper surface 32b of the fire ring 32 of the gasket 15 and the lower surface 13a of the cylinder head 13. As illustrated in FIG. 4, when the second grooves 42 and 43 are not provided, the distribution of the surface pressure (alternate long and short dash line in FIG. 4) is such that the middle part in the radial direction becomes relatively high. On the other hand, when the second grooves 42 and 43 are provided, the distribution of the surface pressure (solid line in FIG. 4) is such that the surface pressure is increased toward the second grooves 42 and 43, and becomes zero at the locations of the second grooves 42 and 43. That is to say, the gas sealing performance is improved than that of the smooth surface pressure distribution, because the peak surface pressure higher than the average surface pressure is applied on both ends of the second grooves 42 and 43.

### [Effects of Present Embodiment]

In a gas sealing structure for an internal combustion engine according to a first aspect, the diesel engine (internal combustion engine) 10 includes the cylinder block 11 including the space part 21 formed in a columnar shape; the cylinder liner 12 formed in a cylindrical shape and that is disposed in the space part 21; the piston 14 movably supported in the axial direction by the cylinder liner 12; the cylinder head 13 fastened to the top of the cylinder block 11; and the gasket 15 disposed between the cylinder block 11 and the cylinder head 13, and between the cylinder liner 12 and the cylinder head 13, and that includes the fire ring 32, in which the contact area between the cylinder liner 12 and the fire ring 3215, and the contact area between the cylinder head 13 and the fire ring 32 are the same.

With the gas sealing structure for the internal combustion engine according to the first aspect, because the contact area between the fire ring 32 and the cylinder liner 12, and the contact area between the fire ring 32 and the cylinder head 13 are the same, the surface pressures on the contact surfaces become the same. As a result, when the cylinder liner 12 or the cylinder head 13 is deformed by receiving the explosion load from the combustion chamber 24, the relative slip seldom occurs on the contact surface between the cylinder liner 12 and the fire ring 32, and on the contact surface between the cylinder head 13 and the fire ring 32. Hence, the surface roughness caused by the relative slip is suppressed. As a result, it is possible to improve the gas sealing performance of the gasket 15.

In the gas sealing structure for the internal combustion engine according to a second aspect, the first groove 41 along the peripheral direction is provided on the contact surface of the cylinder liner 12 with which the fire ring 32 comes into contact, and the second grooves 42 and 43 along the peripheral direction is provided on the contact surface of the cylinder head 13 with which the fire ring 32 comes into contact. Accordingly, it is possible to make the contact area between the fire ring 32 and the cylinder liner 12, and the contact area between the fire ring 32 and the cylinder head 13 to be the same, and suppress complication of the structure.

In the gas sealing structure for the internal combustion engine according to a third aspect, the first groove 41 and the second grooves 42 and 43 are disposed shifted in the radial direction of the cylinder liner 12. Accordingly, it is possible to shift, in the radial direction, the location where the surface pressure on the fire ring 32 passes through. Hence, it is possible to suppress the occurrence of a relative slip on the contact surfaces between the fire ring 32 and the cylinder head 13, and between the cylinder liner 12 and the cylinder head 13.

In the gas sealing structure for the internal combustion engine according to a fourth aspect, the number of the second grooves 42 and 43 is greater than the number of the first groove 41. Accordingly, it is possible to appropriately make the contact area between the fire ring 32 and the cylinder liner 12, and the contact area between the fire ring 32 and the cylinder head 13 to be the same.

The gas sealing structure for the internal combustion engine according to a fifth aspect is provided with the second groove (inner second groove) 42 provided radially inside the first groove 41, and the second groove (outer second groove) 43 provided radially outside the first groove 41, and the radial length L2a between the first groove 41 and the second groove 42, and the radial length L2b between the first groove 41 and the second groove 43 are the same. Accordingly, the cylinder liner 12 and the cylinder head 13 apply equal load in the radial direction onto the fire ring 32 of the gasket 15. Hence, it is possible to suppress reduction in the gas sealing performance.

In the gas sealing structure for the internal combustion engine according to a sixth aspect, the gasket 15 is formed of a soft material capable of forming the first convex part 51 and the second convex parts 52 and 53 that penetrate into the first groove 41 and the second grooves 42 and 43, by plastically deforming under the surface pressure. Accordingly, the first convex part 51 and the second convex parts 52 and 53 serve as anchors for the cylinder liner 12 and the cylinder head 13, and can effectively suppress the occurrence of a relative slip.

### Reference Signs List

- 10: Diesel engine (internal combustion engine)
- 11: Cylinder block
- 12: Cylinder liner
- 13: Cylinder head
- 14: Piston
- 15: Gasket
- 21: Space part
- 22: Piston ring
- 23: Connecting rod
- 24: Combustion chamber
- 25: Intake port
- 26: Exhaust port
- 27: Intake valve
- 28: Exhaust valve
- 29: Fuel injection valve
- 31: Gasket main body
- 32: Fire ring
- 41: First groove
- 42: Second groove (inner second groove)
- 43: Second groove (outer second groove )
- 51: First convex part
- 52, 53: Second convex part

## Claims

1. A gas sealing structure for an internal combustion engine (10) comprising:
a cylinder block (11) that includes a space part (21) formed in a columnar shape;
a cylinder liner (12) that is formed in a cylindrical shape and that is disposed in the space part (21)
a piston (14) that is movably supported in an axial direction by the cylinder liner (12);
a cylinder head (13) that is fastened to top of the cylinder block (11); and
a gasket (15) that is disposed between the cylinder block (11) and the cylinder head (13) and between the cylinder liner (12) and the cylinder head (13), and that includes a fire ring (32), wherein
a contact area between the cylinder liner (12) and the fire ring (32) and a contact area between the cylinder head (13) and the fire ring (32) are same, wherein
a first groove (41) along a peripheral direction of the fire ring (32) is provided on a contact surface of the cylinder liner (12) with which the fire ring (32) comes into contact,
a second groove (42,43) along the peripheral direction of the fire ring (32) is provided on a contact surface of the cylinder head (13) with which the fire ring (32) comes into contact,
wherein that the first groove (41) and the second groove (42,43) are disposed shifted in a radial direction of the cylinder liner (12), **characterized in that** in the fire ring (32), a radial length L1 of the cylinder liner (12) on the contact surface between a lower surface (32a) of the fire ring (32) and an upper surface (12a) of the cylinder liner (12) differs from a radial length L2 of the cylinder liner (12) on the contact surface between an upper surface (32b) of the fire ring (32) and a lower surface (13a) of the cylinder head (13); the radial length L2 is longer than the radial length L1.

2. The gas sealing structure for the internal combustion engine according to claim 1, wherein a number of said second grooves (42,43) is greater than a number of said first grooves (41).

3. The gas sealing structure for the internal combustion engine according to claim 2, wherein
the second grooves (42,43) include an inner second groove (42) provided radially inside the first groove (41), and an outer second groove (43) provided radially outside the first groove (41), and
a radial length between the first groove (41) and the inner second groove (42), and a radial length between the first groove (41) and the outer second groove (43) are same.

4. The gas sealing structure for the internal combustion engine according to any one of claims 1 to 3, wherein the gasket (15) is formed of a soft material capable of forming a first convex part (51) and a second convex part (52,53) that penetrate into the first groove (41) and the second groove (42,43), by plastically deforming under surface pressure.

## Patentansprüche

1. Gasabdichtungsstruktur für einen Verbrennungsmotor (10), umfassend:
einen Zylinderblock (11), der einen Raumteil (21) beinhaltet, der in einer Säulenform ausgebildet ist;
eine Zylinderlaufbuchse (12), die in einer Zylinderform ausgebildet und in dem Raumteil (21) angeordnet ist;
einen Kolben (14), der durch die Zylinderlaufbuchse (12) beweglich in einer axialen Richtung gelagert ist;
einen Zylinderkopf (13), der an einer Oberseite des Zylinderblocks (11) befestigt ist; und
eine Dichtung (15), die zwischen dem Zylinderblock (11) und dem Zylinderkopf (13) sowie zwischen der Zylinderlaufbuchse (12) und dem Zylinderkopf (13) angeordnet ist und die einen Feuerring bzw. Feuersteg (32) beinhaltet, wobei ein Kontaktbereich zwischen der Zylinderlaufbuchse (12) und dem Feuerring (32) und ein Kontaktbereich zwischen dem Zylinderkopf (13) und dem Feuerring (32) gleich sind, wobei
eine erste Nut (41) entlang einer Umfangsrichtung des Feuerrings (32) an einer Kontaktfläche der Zylinderlaufbuchse (12) bereitgestellt ist, mit welcher der Feuerring (32) in Kontakt kommt,
eine zweite Nut (42, 43) entlang der Umfangsrichtung des Feuerrings (32) an einer Kontaktfläche des Zylinderkopfs (13) bereitgestellt ist, mit welcher der Feuerring (32) in Kontakt kommt,
wobei die erste Nut (41) und die zweite Nut (42, 43) in einer radialen Richtung der Zylinderlaufbuchse (12) versetzt angeordnet sind, **dadurch gekennzeichnet, dass** bei dem Feuerring (32) eine radiale Länge L1 der Zylinderlaufbuchse (12) an der Kontaktfläche zwischen einer unteren Fläche (32a) des Feuerrings (32) und einer oberen Fläche (12a) der Zylinderlaufbuchse (12) von einer radialen Länge L2 der Zylinderlaufbuchse (12) an der Kontaktfläche zwischen einer oberen Fläche (32b) des Feuerrings (32) und einer unteren Fläche (13a) des Zylinderkopfs (13) unterschiedlich ist; die radiale Länge L2 länger ist als die radiale Länge L1.

2. Gasabdichtungsstruktur für den Verbrennungsmotor nach Anspruch 1, wobei eine Anzahl der zweiten Nuten (42, 43) größer ist als eine Anzahl der ersten Nuten (41).

3. Gasabdichtungsstruktur für den Verbrennungsmotor nach Anspruch 2, wobei die zweiten Nuten (42, 43) eine innere zweite Nut (42), die radial innerhalb der ersten Nut (41) bereitgestellt ist, und eine äußere zweite Nut (43), die radial außerhalb der ersten Nut (41) bereitgestellt ist, beinhalten, und
eine radiale Länge zwischen der ersten Nut (41) und der inneren zweiten Nut (42) sowie eine radiale Länge zwischen der ersten Nut (41) und der äußeren zweiten Nut (43) gleich sind.

4. Gasabdichtungsstruktur für den Verbrennungsmotor nach einem der Ansprüche 1 bis 3, wobei die Dichtung (15) aus einem weichen Material gebildet ist, das in der Lage ist, einen ersten konvexen Teil (51) und einen zweiten konvexen Teil (52, 53) zu bilden, die durch plastische Verformung unter Flächendruck in die erste Nut (41) und die zweite Nut (42, 43) eindringen.

## Revendications

1. Structure d'étanchéité au gaz pour un moteur à combustion interne (10) comprenant :
un bloc-cylindres (11) qui inclut une pièce d'espace (21) présentant une forme de colonne ;
une chemise de cylindre (12) qui présente une forme cylindrique et qui est disposée dans la pièce d'espace (21) ;
un piston (14) qui est supporté de façon mobile dans un sens axial par la chemise de cylindre (12) ;
une culasse (13) qui est fixée sur le dessus du bloc-cylindres (11) ; et
un joint d'étanchéité (15) qui est disposé entre le bloc-cylindres (11) et la culasse (13) et entre la chemise de cylindre (12) et la culasse (13), et qui inclut un segment de feu (32), dans laquelle
une zone de contact entre la chemise de cylindre (12) et le segment de feu (32) et une zone de contact entre la culasse (13) et le segment de feu (32) sont identiques, dans laquelle
une première rainure (41) le long d'un sens périphérique du segment de feu (32) est prévue sur une surface de contact de la chemise de cylindre (12) avec laquelle le segment de feu (32) entre en contact,
une seconde rainure (42, 43) le long du sens périphérique du segment de feu (32) est prévue sur une surface de contact de la culasse (13) avec laquelle le segment de feu (32) entre en contact,
dans laquelle la première rainure (41) et la seconde rainure (42, 43) sont disposées décalées dans un sens radial de la chemise de cylindre (12), **caractérisée en ce que** dans le segment de feu (32), une longueur radiale L1 de la chemise de cylindre (12) sur la surface de contact entre une surface inférieure (32a) du segment de feu (32) et une surface supérieure (12a) de la chemise de cylindre (12) diffère d'une longueur radiale L2 de la chemise de cylindre (12) sur la surface de contact entre une surface supérieure (32b) du segment de feu (32) et une surface inférieure (13a) de la culasse (13) ; la longueur radiale L2 étant plus longue que la longueur radiale L1.

2. Structure d'étanchéité au gaz pour le moteur à combustion interne selon la revendication 1, dans laquelle un nombre desdites secondes rainures (42, 43) est supérieur à un nombre desdites premières rainures (41) .

3. Structure d'étanchéité au gaz pour le moteur à combustion interne selon la revendication 2, dans laquelle
les secondes rainures (42, 43) incluent une seconde rainure interne (42) prévue radialement à l'intérieur de la première rainure (41), et une seconde rainure externe (43) prévue radialement à l'extérieur de la première rainure (41), et
une longueur radiale entre la première rainure (41) et la seconde rainure interne (42), et une longueur radiale entre la première rainure (41) et la seconde rainure externe (43) sont identiques.

4. Structure d'étanchéité au gaz pour le moteur à combustion interne selon l'une quelconque des revendications 1 à 3, dans laquelle le joint d'étanchéité (15) est formé d'un matériau souple apte à former une première partie convexe (51) et une seconde partie convexe (52, 53) qui pénètrent dans la première rainure (41) et la seconde rainure (42, 43), par déformation plastique sous pression superficielle.
